# EUROPEAN PATENT SPECIFICATION

(11) **EP 2 918 331 B1**
(45) Date of publication and mention of the grant of the patent: **01.07.2020**
(21) Application number: 15157475.3
(22) Date of filing: 03.03.2015
(51) Int. Cl.: B01D 63/06, B01D 67/00, B01D 69/10, B01D 71/02

(54) **SUPPORT FOR A CERAMIC FILTRATION MEMBRANE**
SUPPORT FÜR EINE KERAMISCHE FILTRATIONSMEMBRAN
SUPPORT POUR UNE MEMBRANE DE FILTRATION EN CÉRAMIQUE

(30) Priority: 12.03.2014 ES 201430334
(43) Date of publication of application: 16.09.2015
(73) Proprietor: Likuid Nanotek, S.L., 20009 San Sebastian (Guipuzcoa) (ES)
(72) Inventor: Lopetegui Garnica, Javier, San Sebastian (Guipuzcoa) (ES); Etxeberria Uranga, Jon, San Sebastian (Guipuzcoa) (ES); Ollo Loinaz, Jaione, San Sebastian (Guipuzcoa) (ES)
(74) Representative: Evens, Paul Jonathan

(56) References cited:
- EP-A1- 0 471 910
- EP-A1- 1 609 519
- WO-A1-03/078672
- WO-A2-2008/073417
- JP-A- 2005 305 342
- US-A- 5 415 775
- US-A1- 2010 038 308

## Description

### Field of the Art

The present invention relates to the separation of particles contained in a liquid using filtration or separation elements by means of filtering membranes, proposing a ceramic membrane having a porous ceramic support with a low manufacturing cost and suitable characteristics in terms of filtration, mechanical strength and resistance against chemical etching from cleaning.

### State of the Art

Ceramic membranes used for filtration are formed by a porous support made from a ceramic material and on which thin ceramic layers are deposited. The porous support provides the necessary mechanical rigidity for membrane operation and is responsible for supporting the ceramic layers, whereas the ceramic layers work as a semipermeable physical barrier separating substances contained in the liquid to be filtered according to the size thereof.

Ceramic filtration membranes are strengthened after applying a thermal treatment to the ceramic material known as a sintering process. Particles of a metal compound, generally aluminum oxide particles (Al₂O₃ "alumina"), are used as the raw material for manufacturing the porous support, although zirconium dioxide particles (ZrO₂ "zirconia") or titanium dioxide particles (TiO₂ "titania") are also used.

Particles of the metal compound are mixed with additives, such as binders or plasticizers, when manufacturing the porous support, obtaining a ceramic paste which acquires the shape of a filtration membrane, generally a tubular geometry, after being extruded. After extrusion, the paste is subjected to a drying process and a thermal treatment is then applied thereto in a high-temperature oven where the particles forming the porous support bind to one another, obtaining a support with the required porosity, strength and resistance characteristics.

The membrane manufacturing cost in the field of filtration is transcendental, depending mainly on the porous support manufacturing cost and not so much on the deposited ceramic layers. The manufacturing cost depends mainly on the temperature of the sintering or densification process because the higher the sintering temperature, the higher the energy cost required for binding the particles and the higher the cost of the oven needed.

When the metal compound for manufacturing the porous support is zirconium dioxide or titanium dioxide, the sintering temperature used is low. In contrast, when aluminum oxide is used, given that its atomic conductivity is less than that of zirconium dioxide or titanium dioxide, the sintering temperature negatively affects the filtration membrane manufacturing cost since high temperatures greater than 1700°C are needed for sintering aluminum oxide particles. However, using aluminum oxide has certain advantages compared to using zirconium dioxide or titanium dioxide, such as greater mechanical strength and chemical resistance, as well as a lower cost of the raw material used in the manufacture thereof.

European patent EP751817 discloses an inorganic porous support for filtration membranes sintering at temperatures of less than 1700°C and using corundum particles having a particle size of 63 µm as the raw material and clays selected from the mineral group of nesosilicates, sorosilicates, cyclosilicates, inosilicates, phyllosilicates and tectosilicates as the inorganic binder.

Specifically, according to the composition shown in Table 2 of the first embodiment of this European patent, the inorganic porous support is formed by aluminum oxide (Al₂O₃) in proportions of 61.05%-84.42%, and silicon oxide (SiO₂) in proportions of 13.4%-33.5%, whereby obtaining an inorganic porous support having a suitable porosity of 27.9%-31% with a pore diameter of 4 µm-5 µm using a low sintering temperature of 1180 °C. However, the inorganic porous support obtained with this composition has a relatively low bending strength of 18 Mpa-27 Mpa.

Japanese Patent JP2009220074 discloses an alumina support for inorganic filtration membranes sintering at temperatures comprised between 1200°C-1600°C, and having in the composition thereof aluminum oxide (Al₂O₃) in proportions of 87%-98%, silicon oxide (SiO₂) in proportions of 1%-12%, and an alkali metal oxide and/or an alkaline earth metal oxide in a proportion of less than 4%.

A support having a suitable porosity greater than 25% is also obtained with this composition; however, by using aluminum oxide particles with a particle size of 4 µm-12 µm, the pore size of the obtained support is relatively small and can cause problems when depositing ceramic particles with coarse particle sizes, which will give rise to microfiltration ceramic layers having pore sizes greater than 50 nm. If the size of the ceramic particles is very similar to the pore size of the support on which the particles will be deposited, the ceramic particles do not penetrate the support and form a surface ceramic layer which can peel off during operation thereof due to the lack of adherence to the support. Therefore, the support described in Japanese patent JP2009220074 is suitable for ceramic membranes having small pore sizes but not for ceramic membranes with pore sizes greater than 50 nm. This would entail the need to develop several porous supports to enable covering all the ceramic membrane filtration ranges, which would limit technical-economic product feasibility. EP1609519 A1 discloses a porous support for a filtration membrane made of alumina particles and using silica as binder.

US 2010/038308 A1 discloses a support produced from a mixture of coarse and fine alumina particles.

WO 2008/073417 A2 discloses the use of titania, silica and aluminium hydroxide as sintering aids.

A porous support made of aluminum oxide (Al₂O₃ "alumina") capable of sintering at temperatures of less than 1700°C and having a suitable pore size to give rise to ceramic membranes with pore sizes ranging from 1 to 1000 nm is therefore necessary, such that it results in an alternative variant with a low manufacturing cost with respect to already existing solutions.

### Object of the Invention

The present invention proposes a ceramic filtration membrane having suitable porosity, strength, resistance and a low manufacturing cost as a result of the structural characteristics of the porous support forming it as defined in claim 1.

The ceramic filtration membrane is formed by a porous ceramic support on which thin ceramic layers are deposited. The porous support is obtained after a sintering process for sintering aluminum oxide particles and metal oxide particles at a temperature greater than 1300°C and less than 1500°C. Specifically, to obtain the porous support, the aluminum oxide particles and metal oxide particles are previously mixed by means of a kneading process so they can subsequently go through an extrusion process in which the shape of the porous support is obtained, the obtained ceramic structure is subsequently dried and the sintering process is performed in an oven.

The obtained porous support has a porosity greater than 28%, with a pore size between 1 µm-7 µm and a bending strength greater than 45 MPa.

The aluminum oxide particles of the porous support comprise:
- fine aluminum oxide particles with a particle size of less than 10 µm;
- and coarse aluminum oxide particles with a particle size of 20 µm-150 µm.

The fine aluminum oxide particles have a percentage by weight of 3%-10% with respect to the total weight of the porous support.

It has been envisaged that the coarse aluminum oxide particles comprise particles with a particle size of 45 µm-150 µm, representing a percentage by weight of 50%-70% with respect to the total weight of the porous support, and particles with a particle size of 20 µm-45 µm, representing a percentage by weight of 10%-30% with respect to the total weight of the porous support.

Using aluminum oxide particles having a different particle size allows the contact area between particles to be larger since fine aluminum oxide particles act as a connecting link between coarse aluminum oxide particles. Furthermore, thermal reactivity of fine aluminum oxide particles is higher than that of particles with a larger particle size, so fine aluminum oxide particles allow reducing the sintering temperature to values between 1300°C and 1500°C, maintaining suitable mechanical strength characteristics. Likewise, using fine particles mixed with coarse particles allows regulating porosity and pore size of the porous support.

The percentage by weight of fine aluminum oxide particles is particularly relevant since the higher the percentage of fine aluminum oxide particles, the smaller the pore size and the lower the porosity of the support, and the lower the percentage of fine aluminum oxide particles, the larger the pore size of the porous support, whereby the pore size required for filtration operations (between 1 µm-7 µm) could not be assured.

The metal oxide is silicon oxide, and it has a percentage by weight of 3%-10% with respect to the total weight of the porous support.

Silicon oxide can be obtained from clays, such as illite, for example, or can be obtained in the form of synthetic colloidal silica.

In the case of using clay, the clay combined with aluminum oxide particles facilitates extrusion and also allows reducing the sintering temperature due to the formation of a liquid phase between both. In the case of using colloidal silica, colloidal silica particles act as connecting links between aluminum oxide particles, also reducing the sintering temperature.

The porous support additionally has aluminum hydroxide in the composition thereof in a percentage by weight of 2%-3% with respect to the total weight of the porous support. Like silicon oxide, aluminum hydroxide acts like an agent linking coarse aluminum oxide particles together and aids in reducing the sintering temperature necessary for binding the particles of the porous support.

A ceramic filtration membrane having a lower cost as a result of its structural characteristics, formulation and manufacturing process since the particles forming the porous support of the filtration membrane are sintered at a temperature greater than 1300°C and less than 1500°C is thereby obtained, reducing power consumption and oven investment expenditure. High mechanical bending strength, high resistance to chemical etching (both acids and bases) and high porosity are also obtained, which allow obtaining membranes suitable for filtering large volumes of liquids.

### Description of the Drawings

Figure 1 shows a perspective view of a ceramic filtration membrane with a tubular morphology.
Figure 2 shows a longitudinal section view of the ceramic filtration membrane.
Figure 3 shows an enlarged schematic view of an area of the porous support of the ceramic filtration membrane.

### Detailed Description of the Invention

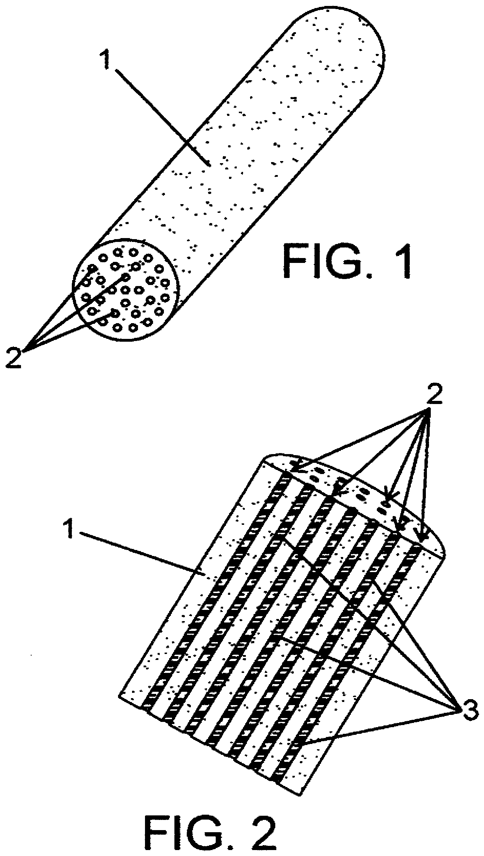

Figures 1 and 2 show a possible embodiment of a ceramic filtration membrane according to the invention.

The ceramic filtration membrane is formed by a porous support (1) made from a ceramic material having inner channels (2) through which the liquid to be filtered is circulated. As seen in the section view of Figure 2, ceramic layers (3) acting as a semipermeable physical barrier for separating substances contained in the liquid to be filtered are deposited in the inner channels (2). Therefore, most of the liquid passes through the ceramic filtration membrane by means of the inner channels (2), and a small part of the liquid is filtered through the ceramic layers (3) and the porous support (1); this filtered liquid is referred to as permeate.

Inorganic filtration membranes have a tubular morphology with a diameter comprised between 10 mm-200 mm and a length of up to 2000 mm.

The porous support (1) is formed by a mixture of aluminum oxide particles (Al₂O₃) having a different particle size and metal oxide particles. Fine aluminum oxide particles with a particle size of less than 10 µm and coarse aluminum oxide particles with a particle size of 20 µm-45 µm and 45 µm-120 µm are used in the composition of the porous support (1).

The metal oxide is silicon oxide (SiO₂). Silicon oxide is used, added to the mixture of aluminum oxide particles in the form of clay or in the form of colloidal silica particles. When clay is used, it has been envisaged that it is illite.

Additionally, aluminum hydroxide AlO(OH) particles are added to the mixture of aluminum oxide (Al₂O₃) particles.

Table 1 shows an example of the components forming the porous support (1) of the ceramic filtration membrane. The percentages of the components are expressed in percentage by weight (weight of the component in relation to the total weight of the composition of the porous support).

**Table 1**

| Composition of the porous support body: | % |
|---|---|
| Aluminum oxide Al₂O₃ with a particle size of 45 µm-150 µm | 50-70 |
| Aluminum oxide Al₂O₃ with a particle size of 20 µm-45 µm | 10-30 |
| Aluminum oxide Al₂O₃ with a particle size of less than 10 µm | 3-10 |
| Aluminum hydroxide AlO(OH) | 2-3 |
| Silicon oxide SiO₂ | 3-10 |

Table 2 shows the characteristics of the obtained porous support:

**Table 2**

| Composition of the porous support body: | Magnitude |
|---|---|
| Pore size | 1 µm-7 µm |
| Porosity | > 28% |
| Bending strength | > 45 Mpa |
| Bending strength after acid etching (1% wt) | > 30 Mpa |
| for 100 hours | |

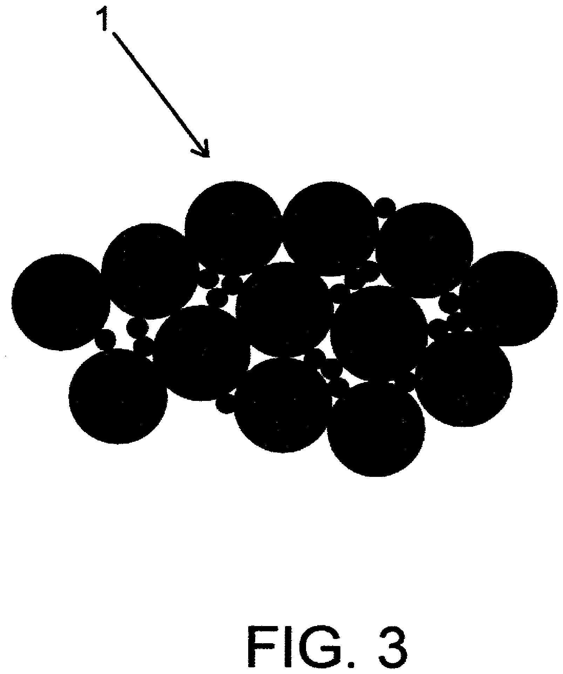

By way of an illustrative example that is in no way limiting, Figure 3 shows an enlarged schematic view of an area of the porous support (1), in which the particles forming the support can be seen. Although the drawing shows spherical particles, the particles forming the porous support (1) have an irregular morphology in most cases, with a greater or smaller number of edges. Therefore, when only coarse aluminum oxide particles are used, they tend to contact with other coarse particles at very few points, such that to assure good binding between particles and suitable mechanical strength of the membrane, the sintering temperature must be increased to values greater than 1700°C.

According to the present invention, fine aluminum oxide particles with a size of less than 10 µm, even less than 1 µm in some cases, act as a connecting link between particles, allowing there to be a larger contact surface between coarse aluminum oxide particles, such that suitable mechanical strength characteristics can be obtained using sintering temperatures between 1300°C-1500°C. Furthermore, given that fine aluminum oxide particles have a thermal reactivity that is higher than coarse particles due to their size, sintering can be performed at lower temperatures than when coarse particles alone are used. Additionally, silicon oxide particles also have high thermal reactivity, which also allows reducing the sintering temperature.

Furthermore, by using fine aluminum oxide particles, the pore size of the porous support (1) can be reduced, obtaining a porous support with a pore size between 1 µm-7 µm, a bending strength greater than 45 MPa and suitable chemical resistance. Given the characteristics of the obtained porous support, it allows ceramic particles to be deposited thereon, penetrating the interior thereof, giving rise to ceramic layers (3) with a pore size between 1 and 1000 nm.

## Claims

1. A ceramic filtration membrane with a porous support (1) having a pore size of 1 µm-7 µm which is formed by sintering aluminum oxide particles and metal oxide particles at a temperature greater than 1300°C and less than 1500°C, with the aluminum oxide particles comprising coarse aluminum oxide particles with a particle size of 20 µm-150 µm and with the metal oxide being silicon oxide, **characterized in that**: the coarse aluminum oxide particles comprise particles with a particle size of 45 µm-150 µm, representing a percentage by weight of 50%-70% with respect to the total weight of the porous support (1), and particles with a particle size of 20 µm-45 µm, representing a percentage by weight of 10%-30% with respect to the total weight of the porous support (1); the silicon oxide represents a percentage by weight of 3%-10% with respect to the total weight of the porous support (1); the aluminum oxide particles further comprise fine aluminum oxide particles with a particle size of less than 10 µm, where the fine aluminum oxide particles have a percentage by weight of 3%-10% with respect to the total weight of the porous support (1); and the porous support (1) has a porosity greater than 28% and a bending strength greater than 45 MPa, in which the porous support (1) additionally has aluminum hydroxide AlO(OH) in the composition thereof and in which aluminum hydroxide AlO(OH) represents a percentage by weight of 2%-3% with respect to the total weight of the porous support (1).

## Patentansprüche

1. Keramische Filtermembran mit einem porösen Träger (1) mit einer Porengröße von 1 µm - 7 µm, der durch Sintern von Aluminiumoxidteilchen und Metalloxidteilchen auf einer Temperatur von über 1300°C und weniger als 1500°C gebildet wird, wobei die Aluminiumoxidteilchen grobe Aluminiumoxidteilchen mit einer Teilchengröße von 20 µm -150 µm umfassen, und wobei das Metalloxid Siliziumoxid ist, **dadurch gekennzeichnet, dass**: die groben Aluminiumoxidteilchen Teilchen mit einer Teilchengröße von 45 µm -150 µm umfassen, die einen prozentualen Gewichtsanteil von 50% - 70% im Verhältnis zu dem Gesamtgewicht des porösen Trägers (1) darstellen, und Teilchen mit einer Teilchengröße von 20 µm - 45 µm, die einen prozentualen Gewichtsanteil von 10% - 30% im Verhältnis zu dem Gesamtgewicht des porösen Trägers (1) darstellen; wobei das Siliziumoxid einen prozentualen Gewichtsanteil von 3% -10% im % im Verhältnis zu dem Gesamtgewicht des porösen Trägers (1) darstellt; wobei die Aluminiumoxidteilchen feine Aluminiumoxidteilchen mit einer Teilchengröße von weniger als 10 µm umfassen, wobei die feinen Aluminiumoxidteilchen einen prozentualen Gewichtsanteil von 3% -10% im Verhältnis zu dem Gesamtgewicht des porösen Trägers (1) darstellen; und wobei der poröse Träger (1) eine Porosität von mehr als 28% und eine Biegefestigkeit von über 45 MPa aufweist, wobei der poröse Träger (1) zusätzlich Aluminiumhydroxid AIO (OH) in seiner Zusammensetzung aufweist, und wobei das Aluminiumhydroxid AIO (OH) einen prozentualen Gewichtsanteil von 2% - 3% im Verhältnis zu dem Gesamtgewicht des porösen Trägers (1) darstellt.

## Revendications

1. Membrane de filtration céramique munie d'un support poreux (1) ayant une taille de pore de 1 µm à 7 µm qui est formée par frittage de particules d'oxyde d'aluminium et de particules d'oxyde métallique à une température supérieure à 1 300°C et inférieure à 1500°C, les particules d'oxyde d'aluminium comprenant des particules d'oxyde d'aluminium grossières ayant une taille de particule de 20 µm à 150 µm et l'oxyde métallique étant l'oxyde de silicium, **caractérisée en ce que** : les particules d'oxyde d'aluminium grossières comprennent des particules ayant une taille de particule de 45 µm à 150 µm, représentant un pourcentage en poids de 50 % à 70 % par rapport au poids total du support poreux (1), et des particules ayant une taille de particule de 20 µm à 45 µm, représentant un pourcentage en poids de 10 % à 30 % par rapport au poids total du support poreux (1) ; l'oxyde de silicium représente un pourcentage en poids de 3 % à 10 % par rapport au poids total du support poreux (1) ; les particules d'oxyde d'aluminium comprennent en outre des particules d'oxyde d'aluminium fines ayant une taille de particule inférieure à 10 µm, les particules d'oxyde d'aluminium fines ayant un pourcentage en poids de 3 % à 10 % par rapport au poids total du support poreux (1) ; et le support poreux (1) a une porosité supérieure à 28 % et une résistance à la flexion supérieure à 45 MPa,
dans laquelle le support poreux (1) contient en outre de l'hydroxyde d'aluminium AIO(OH) dans sa composition et
dans laquelle l'hydroxyde d'aluminium AIO(OH) représente un pourcentage en poids de 2 % à 3 % par rapport au poids total du support poreux (1).
